# EUROPÄISCHE PATENTSCHRIFT

(11) **EP 3 660 371 B1**
(45) Veröffentlichungstag und Bekanntmachung des Hinweises auf die Patenterteilung: **23.12.2020**
(21) Anmeldenummer: 18000925.0
(22) Anmeldetag: 27.11.2018
(51) Int. Cl.: F16K 31/50, F16K 37/00, F16K 3/26, G01F 1/00, G01F 1/26

(54) **VERTEILERVENTIL MIT DURCHFLUSSMESSER FÜR FLÜSSIGE MEDIEN**
DISTRIBUTION VALVE WITH FLOW METER FOR FLUID MEDIA
VANNE DE DISTRIBUTION POURVUE DE DÉBITMÈTRE POUR MILIEUX LIQUIDES

(43) Veröffentlichungstag der Anmeldung: 03.06.2020
(73) Patentinhaber: Capricorn S.A., 58-160 Swiebodzice (PL)
(72) Erfinder: Dr.hab.inz. PAPIERSKI, Adam, 90-924 lódz (PL); Dr. Inz. NAJDECKI, Stefan, 90-924-lódz (PL); Dr. inz. SUSIK, Mariusz, 90-924 Lódz (PL); Prof. Dr. hab.inz. BLASZCZYK, Andrzej, 90-924 lódz (PL)
(74) Vertreter: Kietzmann, Manfred

(56) Entgegenhaltungen:
- WO-A1-03/089844
- WO-A1-2005/111479
- WO-A2-2016/101080
- DE-A1-102008 010 347
- DE-U1- 20 117 196

## Beschreibung

Die Erfindung betrifft ein Verteilerventil mit Durchflussmesser, das insbesondere bei Fußbodenheizungen Verwendung findet.

### Derartige Verteilerventile sind bekannt.

So weist die Einstell- und Messeinheit des EP 1 497 591 B1 mit dem Ziel der Umfunktionierung eines Verteilerventils mit Durchflussmesser als Absperrventil einen Ventilschließkörper auf, der mit einer Einstellspindel derartig wirkverbunden ist, dass er zusammen mit einem bei bestimmungsgemäßem Betrieb gegenüber dem Gehäuse feststehenden Ventilsitzkörper einen durch Drehung der Einstellspindel einstellbaren Ventilspalt zur Einstellung der Durchflussmenge bildet.

Bei der Einstellspindel handelt es sich im maschinenbautechnischen Sinn um eine Gewindespindel. Die Drehbewegung wird vom Ventilschließkörper im feststehenden Gehäuse vollzogen, wobei durch die gleichzeitige Bewegung des Ventilschließkörpers auf oder weg vom Ventilsitzkörper sich der Ventilspalt vergrößert oder verkleinert. Der Ventilschließkörper vollzieht beim Einstellen eine Drehbewegung und eine translatorische Bewegung, wobei die Abdichtung des Ventilspaltes über eine Anschlagschulter erfolgt.

Auch die WO 2016/101080 A2 nutzt bei einem Verteilerventil als Einstelleinheit eine Einstellspindel, deren axiale Position gegenüber einem mit dem Gehäuse verbundenen Bauteil der Einstelleinheit durch Verdrehen verändert werden kann, unter einer Veränderung der Durchflussmenge. Bei der DE 201 17 196 U1, die einen Verteilerventileinsatz mit Durchflussmesser beschreibt, kommt eine Gewindedurchgangsbohrung mit einer darin gelagerten Gewindespindel zum Einsatz, die eine Öffnung einer Zweigleitung verschließt bzw. öffnet.

Nachteilig bei diesen Lösungen ist die fehlende oder unzureichende Einflussnahme auf die Strömung, so dass optimale und hohe Kv-Werte nicht erreicht werden.

Aufgabe der Erfindung ist es, ein Verteilerventil mit verbesserter und genauerer Einstellbarkeit des Durchflusses unter Erzielung eines hohen Kv-Wertes vorzuschlagen.

Gelöst wird diese Aufgabe durch die Merkmale des Anspruches 1. Vorteilhafte Ausgestaltungen sind Gegenstand der Unteransprüche.

Bei einem Verteilerventil mit Durchflussmesser für ein flüssiges Medium, das mit einem Außenkörper über ein Gewinde an einen Verteilerbalken angeschlossen ist und über mindestens eine Einlassöffnung verfügt, mit einem Innenkörper, der im Außenkörper in seiner axialen Position mittels einer drehbaren Einstellmutter veränderbar und dabei mit seinem mindestens einen Einströmkanal in eine korrespondierenden Lage zur Einlassöffnung des Außenkörpers bringbar ist, so dass das flüssige Medium in den Innenkörper strömt, wobei der Innenkörper innen einen sich nach außen hin konisch erweiternden Ausströmkanal aufweist, in dem ein Kolben axial bewegbar und geführt durch eine den Innenkörper axial durchdringende Kolbenstange angeordnet ist, wobei die Kolbenstange mit einem Anzeigeelement kombiniert ist, das die Bewegung des Kolbens in Abhängigkeit von der Strömung des den Ausströmkanal durchströmenden Mediums anzeigt, wird erfindungsgemäß vorgeschlagen, dass

der Innenkörper ausschließlich axial verschiebbar im Außenkörper angeordnet ist,
die mindestens eine Einlassöffnung des Außenkörpers durch den Innenkörper verschließbar ist
und der Einströmkanal des Innenkörpers über Fenster mit dem Ausströmkanal verbunden ist,
wobei die Form der Fenster und die Radien im Einströmkanal so ausgelegt sind, dass ein hoher Kv-Wert erzielbar ist.

Um die Einlassöffnung des Außenkörpers durch den Innenkörper sicher zu verschließen, sieht eine vorteilhafte Ausgestaltung vor, dass der Innenkörper axial und beabstandet O-Ringe aufweist, die bei geschlossenem Verteilerventil beidseitig von der Einlassöffnung des Außenkörpers angeordnet sind.

Die Beschränkung der Bewegung des Innenkörpers auf eine axiale Verschiebbarkeit wird bei einer bevorzugten Ausführung dadurch erreicht, dass der Innenkörper mindestens eine äußere axial verlaufende Nut oder einen Nutabschnitt aufweist, in die ein Innensteg des Außenkörpers eingreift, so dass eine Verdrehung des Innenkörpers bei Drehung der Einstellmutter für den Innenkörper ausgeschlossen ist.

Grundsätzlich wäre es auch möglich, dass der Außenkörper eine innere Nut oder einen inneren Nutabschnitt aufweist, in dem ein äußerer Steg des Innenkörpers eingreift, so dass eine Verdrehung des Innenkörpers bei Drehung der Einstellmutter ausgeschlossen ist. Dies wäre jedoch montagetechnisch für den Innenkörper aufwendiger.

Eine weitere vorteilhafte Ausbildung sieht vor, dass die axiale Verschiebung des Innenkörpers von oben durch die Einstellmutter und von unten durch mindestens einen, vorzugsweise zwei, in Richtung Innenkörper weisende Vorsprünge des Außenkörpers begrenzt ist. Diese Vorsprünge sind bevorzugt im unteren Bereich des Außenkörpers angeordnet. Untere Bereich bedeutet in Richtung des Ausganges des Ausströmkanals.

4 Dieser Vorsprung oder diese Vorsprünge können so gleichzeitig die Funktion des Innensteges oder der Innenstege übernehmen, die in jeweils eine Nut des Innenkörpers als Verdrehsicherung eingreifen. Bei zwei Vorsprüngen sind dann auch zwei Nute erforderlich.

Die Radien im Einströmkanal sind so angeordnet, dass das einströmende Medium nach oben in Richtung Einstellmutter strömt und nach dem Durchströmen der Fenster des Innenkörpers eine Richtungsumkehrung der Strömung erfolgt.

Die Erfindung soll anhand der Zeichnungen erläutert werden. Es zeigen:
- Fig. 1: das Verteilerventil von außen
- Fig. 2: das geschlossene Verteilerventil und
- Fig. 3: das voll geöffnete Verteilerventil.

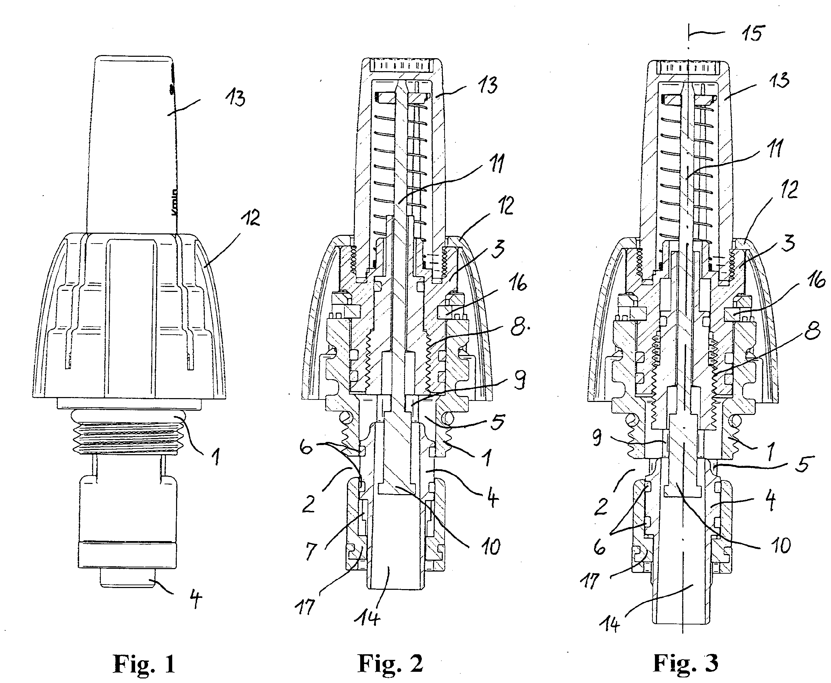

Das in den **Fig. 1** bis **Fig. 3** dargestellte Verteilerventil mit Durchflussmesser weist einen Außenkörper 1 auf, der mit einem Gewinde und einer O-Dichtung in einem Verteilerbalken (nicht dargestellt) befestigt wird.

Im Außengehäuse 1 ist ein Innenkörper 4 axial verschiebbar angeordnet. Die Position des Innenkörpers 4 und damit die Öffnung des Einströmkanals 5 in den Innenkörper 4 wird durch eine Gewindeverbindung mit einer Einstellmutter 3 bestimmt. Die Einstellmutter 3 kann nur relativ zum Außenkörper 1 eine Drehbewegung ausführen, da ihre axiale Verschiebung durch einen Sprengring 16 oder einen Splint des Außenkörpers 1 blockiert wird.

Die axiale Verschiebung des Innenkörpers 4 ist somit von oben durch die Einstellmutter 3 begrenzt und von unten erfüllen bei dieser Ausführung diese Aufgabe zwei in Richtung Innenkörper 4 weisende Vorsprünge 17 des Außenkörpers 1.

Der obere Teil der Einstellmutter 3 weist eine Gewindebuchse zur Befestigung eines transparenten Anzeigeelementes 13 auf.

Zur Bewegung der Einstellmutter 3 ist auf dieser ein Drehkopf 12 aufgesetzt.

Der Innenkörper weist einen sich nach außen hin konisch erweiternden Ausströmkanal 14 auf, in dem ein Kolben 10 axial bewegbar und geführt durch eine den Innenkörper 4 axial durchdringende Kolbenstange 11 angeordnet ist. Die Bewegung der Kolbenstange 11 ist federbelastet. Die Kolbenstange 11 reicht bis in das Anzeigeelement 13 hinein und besitzt hier einen Anzeigeteller, so dass die Bewegung des Kolbens 10 und damit der Kolbenstange 11 infolge des Ausströmdruckes des flüssigen Mediums als Maß für den Durchfluss anzeigbar ist (hier nicht dargestellt).

Der Außenkörper 1 weist eine Einlassöffnung 2 in den Einströmkanal 5 des Innenkörpers 4 auf. Durch die axiale Verschiebung des Innenkörpers 4 in der Ventilachse 15 lässt sich die Einlassöffnung 2 verschließen, was zusätzlich durch beabstandete O-Ringe 6 unterstützt wird, die in dieser Position beidseitig der Einlassöffnung 2 angeordnet sind.

Wird durch Drehen der Einstellmutter 3 der Innenkörper 4 axial in Richtung des Vorsprunges 17 verschoben, wird die Einlassöffnung 2 geöffnet und das Medium strömt in den Einströmkanal 5 des Innenkörpers. Das erfolgt durch die Radienanordnung im Einströmkanal 5 in Richtung Einstellmutter 3.

Im oberen Bereich weist der Innenkörper 4 dann Fenster 9 auf, die ebenfalls strömungsoptimiert sind, so dass das strömende Medium mit einem möglichst hohen Kv-Wert in den sich konisch erweiternden Ausströmkanal 14 des Innenkörpers 4 unter Umkehr der Strömungsrichtung gelangt, wobei ein Strömungsdruck auf den Kolben 10 ausgeübt wird. Das führt zu einer Kolbenbewegung in Richtung der Öffnung des Ausströmkanals 14 und damit zu einer Anzeige in dem Anzeigeelement 13.

Um die Wirkung der im Einströmkanal 5 genutzten Radien und die strömungsoptimierte Form der Fenster 9 optimal in Bezug auf einen hohen Kv-Wert zur Geltung zu bringen, wird ein Verdrehen des Innenkörpers 4 ausgeschlossen.

Dazu dienen zwei außen im Innenkörper 4 verlaufende axiale Nute 7 oder Nutabschnitte, in die jeweils ein Innensteg des Außenkörpers 1 bei der axialen Verschiebung des Innenkörpers 4 eingreift. Die Nute 7 sind hier so ausgeführt, dass keine gesonderten Innenstege notwendig sind, sondern die Funktion der Verdrehsicherung durch die o.g. Vorsprünge 17 mit übernommen wird. Die Vorsprünge 17 befinden sich deshalb im unteren Abschnitt des Außenkörpers 1.

### Bezugszeichenliste

- 1: Feststehender Außenkörper
- 2: Einlassöffnung Außenkörper
- 3: Einstellmutter
- 4: Innenkörper
- 5: Einströmkanal Innenkörper
- 6: O-Ringe Innenkörper
- 7: axiale Nut im Innenkörper
- 8: Gewindeverbindung Innenkörper Einstellmutter
- 9: Fenster
- 10: Kolben
- 11: Kolbenstange mit Anzeige
- 12: Drehknopf
- 13: Anzeigeelement
- 14: Ausströmkanal
- 15: Ventilachse
- 16: Sprengring
- 17: Vorsprung

## Patentansprüche

1. Verteilerventil mit Durchflussmesser für ein flüssiges Medium, das mit einem Außenkörper (1) über ein Gewinde an einen Verteilerbalken angeschlossen ist und über mindestens eine Einlassöffnung (2) verfügt, einem Innenkörper (4), der im Außenkörper (1) in seiner axialen Position mittels einer drehbaren Einstellmutter (3) veränderbar und dabei mit seinem mindestens einen Einströmkanal (5) in eine korrespondierenden Lage zur Einlassöffnung (2) des Außenkörpers (1) bringbar ist, so dass das flüssige Medium über Fenster (9) in den Innenkörper (4) strömt, wobei der Innenkörper (4) innen einen sich nach außen hin konisch erweiternden Ausströmkanal (14) aufweist, in dem ein Kolben (10) axial bewegbar und geführt durch eine den Innenkörper (4) axial durchdringende Kolbenstange (11) angeordnet ist, wobei die Kolbenstange (11) mit einem Anzeigeelement (13) kombiniert ist, das die Bewegung des Kolbens (10) in Abhängigkeit von der Strömung des den Ausströmkanal (14) durchströmenden Mediums anzeigt, **dadurch gekennzeichnet, dass**
der Innenkörper (4) ausschließlich axial verschiebbar im Außenkörper (1) angeordnet ist, wobei die mindestens eine Einlassöffnung (2) des Außenkörpers (1) durch den Innenkörper (4) verschließbar ist und der Einströmkanal (5) über Fenster (9) mit dem Ausströmkanal (14) verbunden ist, wobei der Einströmkanal (5) über Radien verfügt, die so angeordnet sind, dass das einströmende Medium nach oben in Richtung Einstellmutter (3) fließt und nach dem Durchströmen der Fenster (9) eine Richtungsumkehrung erfolgt.

2. Verteilerventil nach Anspruch 1, **dadurch gekennzeichnet, dass**
der Innenkörper (4) axial und beabstandet 0-Ringe (6) aufweist, die bei geschlossenem Verteilerventil beidseitig von der Einlassöffnung (2) angeordnet sind.

3. Verteilerventil nach Anspruch 1 oder 2, **dadurch gekennzeichnet, dass**
der Innenkörper (4) mindestens eine äußere axial verlaufende Nut (7) oder einen Nutabschnitt aufweist, in die ein Innensteg des Außenkörpers (1) eingreift, so dass eine Verdrehung des Innenkörpers (4) bei Drehung der Einstellmutter (3) ausgeschlossen ist.

4. Verteilerventil nach Anspruch 1 oder 2, **dadurch gekennzeichnet, dass**
der Außenkörper (1) eine innere Nut (7) oder einen inneren Nutabschnitt aufweist, in dem ein äußerer Steg des Innenkörpers (4) eingreift, so dass eine Verdrehung des Innenkörpers (4) bei Drehung der Einstellmutter (3) ausgeschlossen ist.

5. Verteilerventil nach einem der Ansprüche 1 bis 4, **dadurch gekennzeichnet, dass**
die axiale Verschiebung des Innenkörpers (4) von oben durch die Einstellmutter (3) und von unten durch mindestens einen in Richtung Innenkörper (4) weisenden Vorsprung (17) des Außenkörpers (1) begrenzt ist.

6. Verteilerventil nach Anspruch 3 oder 5, **dadurch gekennzeichnet, dass**
der Innensteg des Außenkörpers (1) zur Verdrehsicherung identisch ist mit dem mindestens einen Vorsprung (17), der die Längsverschiebung des Innenkörpers (4) auf der der Einstellmutter (3) gegenüberliegenden Seite begrenzt.

## Claims

1. A distribution valve having a flow meter for a liquid medium which is connected to a distribution bar by an outer body (1) via a thread and which has at least one inlet opening (2), an inner body (4) which is alterable in its axial position in the outer body (1) by means of a rotatable adjusting nut (3) and is able, with its at least one inflow channel (5), to be brought into a corresponding position relative to the inlet opening (2) of the outer body (1) such that the liquid medium flows into the inner body (4) via windows (9), wherein the inner body (4) has an outflow channel (14) inside expanding conically outwards in which a piston (10) is arranged such that it is axially movable and guided by a piston rod (11) axially penetrating the inner body (4), wherein the piston rod (11) is combined with a display element (13) which displays the movement of the piston (10) depending on the flow of the medium flowing through the outflow channel (14), **characterized in that**
the inner body (4) is arranged in the outer body (1) such that it is exclusively axially displaceable, wherein the at least one inlet opening (2) of the outer body (1) is closable by the inner body (4) and the inflow channel (5) is connected to the outflow channel (14) via windows (9),
wherein the inflow channel (5) includes radii arranged such that the inflowing medium flows upwards in the direction of the adjusting nut (3) and that a direction reversal occurs after flowing through the windows (9).

2. The distribution valve according to Claim 1, **characterized in that** the inner body (4) has axial and spaced-apart O-rings (6) which are arranged on either side of the inlet opening (2) when the distribution valve is closed.

3. The distribution valve according to Claim 1 or 2, **characterized in that** the inner body (4) has at least one outer groove (7) running axially or one groove portion with which an inner ridge of the outer body (1) engages, such that torsion of the inner body (4) upon rotation of the adjusting nut (3) is prevented.

4. The distribution valve according to Claim 1 or 2, **characterized in that** the outer body (1) has an inner groove (7) or an inner groove portion with which an outer ridge of the inner body (4) engages, such that torsion of the inner body (4) upon rotation of the adjusting nut (3) is prevented.

5. The distribution valve according to any one of Claims 1 to 4, **characterized in that** the axial displacement of the inner body (4) is limited from above by the adjusting nut (3) and from below by at least one protrusion (17) of the outer body (1) oriented in the direction of the inner body (4).

6. The distribution valve according to Claim 3 or 5, **characterized in that** for torsion prevention, the inner ridge of the outer body (1) is identical to the at least one protrusion (17) which limits the longitudinal displacement of the inner body (4) on the side opposite the adjusting nut (3).

## Revendications

1. Soupape de distribution avec débitmètre pour un fluide liquide, laquelle est raccordée avec un corps extérieur (1) par un filetage à un distributeur et dispose d'au moins un orifice d'admission (2), un corps intérieur (4), lequel peut être modifié dans le corps extérieur (1) relativement à sa position axiale à l'aide d'un écrou de réglage (3) pivotant et pouvant passer avec son au moins un canal d'admission (5) dans une position par rapport à l'orifice d'admission (2) du corps extérieur (1) correspondante, de telle sorte que le fluide liquide s'écoule par des fenêtres (9) dans le corps intérieur (4), le corps intérieur (4) présentant à l'intérieur un canal d'évacuation (14) s'évasant vers l'extérieur de façon conique, dans lequel un piston (10) déplaçable axialement et conduit par une tige de piston (11) traversant axialement le corps intérieur (4) est disposé, la tige de piston (11) étant combiné avec un élément d'affichage (13), lequel affiche le mouvement du piston (10) en fonction du courant du fluide traversant le canal d'évacuation (14), **caractérisé en ce que**
le corps intérieur (4) est disposé dans le corps extérieur (1) uniquement de façon déplaçable axialement, l'au moins un orifice d'admission (2) du corps extérieur (1) pouvant être fermé par le corps intérieur (4) et le canal d'admission (5) étant raccordé par des fenêtres (9) avec le canal d'évacuation (14),
le canal d'admission (5) disposant de rayons qui sont disposés de telle sorte que le fluide affluant s'écoule vers le haut en direction de l'écrou de réglage (3) et qu'un changement de direction est effectué après que les fenêtres (9) ont été traversées.

2. Soupape de distribution selon la revendication 1, **caractérisée en ce que** le corps intérieur (4) présente axialement des joints toriques (6) avec espacement, lesquels sont disposés des deux côtés de l'ouverture d'admission (2) lorsque la soupape de distribution est fermée.

3. Soupape de distribution selon la revendication 1 ou 2, **caractérisée en ce que** le corps intérieur (4) présente au moins une rainure extérieure (7) s'étendant axialement ou une section de rainure, dans laquelle s'engage une nervure intérieure du corps extérieur (1), de telle sorte qu'une torsion du corps intérieur (4) est exclue lors de la rotation de l'écrou de réglage (3).

4. Soupape de distribution selon la revendication 1 ou 2, **caractérisée en ce que** le corps extérieur (1) présente une rainure intérieure (7) ou une section de rainure intérieure, dans laquelle s'engage une nervure extérieure du corps intérieur (4), de telle sorte qu'une torsion du corps intérieur (4) est exclue lors de la rotation de l'écrou de réglage (3).

5. Soupape de distribution selon l'une des revendications 1 à 4, **caractérisée en ce que** le déplacement axial du corps intérieur (4) est limité du haut par l'écrou de réglage (3) et du bas par au moins une saillie (17) du corps extérieur (1) pointant dans la direction du corps intérieur (4).

6. Soupape de distribution selon la revendication 3 ou 5, **caractérisée en ce que**, pour la protection contre la torsion, la nervure intérieure du corps extérieur (1) est identique à l'au moins une saillie (17), laquelle limite le déplacement longitudinal du corps intérieur (4) du côté opposé à l'écrou de réglage (3).
